# EUROPÄISCHE PATENTANMELDUNG

(11) **EP 1 520 462 A2**
(43) Veröffentlichungstag der Anmeldung: **06.04.2005**
(21) Anmeldenummer: 04020096.6
(22) Anmeldetag: 25.08.2004
(51) Int. Cl.: A01C 23/00

(54) **Gülleausbringfahrzeug**

(30) Priorität: 26.08.2003 DE 10339162
(71) Anmelder: Zunhammer, Sebastian, 83301 Traunreut (DE)
(72) Erfinder: Zunhammer, Sebastian, 83301 Traunreut (DE)

(57) **Zusammenfassung**

Die Erfindung betrifft ein Gülleausbringfahrzeug (1), bei dem mit Hilfe eines verstellbaren Auslegers (9) der Abstand der Austrittsöffnungen (5a) von Schleppschläuchen (5) zu einer horizontalen Schwenkachse (AH) eingestellt werden kann. Dadurch kann bei Fahrten im Transportzustand die Bauhöhe des Gülleausbringfahrzeugs (1) reduziert werden.

## Beschreibung

Die vorliegende Erfindung bezieht sich auf ein Gülleausbringfahrzeug gemäß dem Oberbegriff des Anspruches 1.

Bekannte Gülleausbringfahrzeuge sind mit einem Verteilersystem ausgerüstet, welches sich über die mehrfache Breite des Gülleausbringfahrzeugs erstreckt. In einem möglichen Betriebszustand befindet sich das Verteilersystem in einer Ausbringstellung, in welcher sich das Verteilersystem im wesentlichen quer zur Fahrtrichtung des Ausbringfahrzeugs erstreckt.

In einem anderen Betriebszustand befindet sich das Verteilersystem in der so genannten Transportstellung, nämlich im Transportfall, wenn keine Gülle ausgebracht wird, wenn das Gülleausbringfahrzeug beispielsweise am öffentlichen Straßenverkehr teilnimmt. In dieser Stellung sind Teilabschnitte des Verteilersystems um ca. 90° zur Fahrzeuglängsachse hin abgewinkelt und verlaufen parallel zur Längsachse des Gülleausbringfahrzeuges.

Eine derartige Lösung wird durch die DE 195 40 648 A1 dokumentiert, in welcher vorgeschlagen wird, bei einem Gülleausbringfahrzeug einen Hilfsrahmen vorzusehen, an welchem voneinander beabstandet angebrachte Dungspendedüsen vorgesehen sind. Diese Dungspendedüsen werden Leitungen von einer Verteilerpumpe einzeln bzw. paarweise gespeist und können mit Hilfe des als drehbarer Balken ausgebildeten Hilfsrahmens in eine erhöhte Position verschwenkt werden. Dabei werden die Spiralschläuche um ca. 180° verschwenkt, wodurch sie biegemechanisch allerdings enorm belastet werden und schnell verschleißen. Im übrigen sind die Spiralschläuche - im wesentlichen längsstabil abgestützt - mit dem drehbaren Balken verbunden und schwenken mit diesem mit. So soll ein Auslecken von Gülle verhindert werden. Ein derartiges Gülleausbringfahrzeug weist mit den nach oben geschwenkten Spiralschläuchen allerdings eine relativ große Bauhöhe auf.

Zum Stand der Technik gehört auch das Ausbringen von Gülle mit Hilfe eines Pralltellerverteilers, durch welchen-die auszubringende Gülle ausgespritzt wird. Um die unvermeidbare Geruchsbelästigung bei derartiger Gülleausbringung zu reduzieren, ist im deutschen Gebrauchsmuster DE 295 17 792 U 1 ein Verteilersystem beschrieben, durch welches mit Hilfe von zur Ackerfläche hin gerichteten Gülleauslauföffnungen die Gülle ausgebracht wird. Die rohrförmigen Auslaufstutzen sind dabei an horizontal verlaufenden Verteilerrohren angeordnet, die über Zuführungsleitungen mit einem Güllevorratsbehälter verbunden sind.

Im deutschen Gebrauchsmuster DE 296 01 934 U 1 sind nähere Angaben über die Ausgestaltung der Verteilerrohre gemacht. Dort sind auch, ebenso wie im vorgenannten Gebrauchsmuster, Förderschnecken erwähnt, mit deren Hilfe Feststoffe in der Gülle in Außenbereiche der Verteilerrohre gefördert werden sollen.

Einen ähnlichen Gülleverteiler mit Verteilerrohren zeigt auch das deutsche Gebrauchsmuster 296 01 939 U1.

In den letztgenannten Druckschriften sind keine Angaben darüber gemacht, wie die Verschmutzung der öffentlichen Wege und Straßen vermieden werden kann, wenn derartige Gülleausbringfahrzeuge am öffentlichen Straßenverkehr teilnehmen.

Einen Lösungsvorschlag zu dem vorbeschriebenen Problemkreis zeigt jedoch auch die deutsche Patentschrift DE 195 20 950 C 1 auf. Dort wird vorgeschlagen, nach unten zur Ackerfläche hin gerichtete Gülleauslaufschläuche mittels eines Quetschschlauches abzuquetschen, wenn die Gülleausbringung beendet und mit dem Gülleausbringfahrzeug öffentliche Straßen und Wege befahren werden sollen.

Der vorliegenden Erfindung liegt die Aufgabe zugrunde, ein Gülleausbringfahrzeug der eingangs genannten Art bei einfachster Bauweise dahingehend zu verbessern, dass im Transportzustand die Gesamthöhe des Gülleausbringfahrzeugs geringer ist, als bei den bekannten Gülleausbringfahrzeugen mit nach oben schwenkbaren Auslaufschläuchen, wobei das Gülleausbringfahrzeug störungsunanfällig und langlebig sein soll.

Diese Aufgabe wird mit einem Gülleausbringfahrzeug gemäß den Merkmalen des Anspruches 1 gelöst. Durch die Merkmale der abhängigen Ansprüche wird die Erfindung in vorteilhafter Weise ausgestaltet.

Die besonderen Vorteile des erfindungsgemäßen Gülleausbringfahrzeuges liegen darin, dass es einfach aufgebaut ist, seine Bauteile nur geringst möglich beansprucht werden, dass dennoch eine optimale Verteilung der Gülle erfolgen kann, und dass nach Beendigung der Gülleausbringung gewährleistet ist, dass eine ungewünschte Verschmutzung von Wegen und Straßen unterbleibt, wobei die Gesamthöhe des Gülleausbringfahrzeugs verhältnismäßig gering ist.

Die Erfindung wird vorteilhaft durch ein Gülleausbringfahrzeug mit einem Güllefass und einer Gülleverteilvorrichtung realisiert, bei dem die Gülleverteilvorrichtung Schleppschläuche zum bodennahen Ausbringen der Gülle aufweist, die aus einer Arbeitsstellung, in welcher die Austrittsöffnungen der Schleppschläuche in Bodennähe nach unten weisen, und derart um eine horizontale Achse schwenkbar sind, dass ihre Austrittsöffnungen in einer Transportstellung vom Boden weg nach oben weisen, und bei dem die Gülleverteilvorrichtung über eine Vorrichtung zur Einstellung des Abstands zwischen der horizontalen Schwenkachse und den Austrittsöffnungen der Schleppschläuche verfügt.

Dabei ist es günstig, wenn die Gülleverteilvorrichtung einen Rahmen aufweist, an welchem die Schleppschläuche befestigt sind, und wenn der Rahmen mit den Schleppschläuchen um eine horizontale Achse schwenkbar ist, wobei der Abstand der Auslauföffnungen der Schleppschläuche von dieser Achse in der Arbeitsstellung größer ist, als in der Transportstellung.

Besonders günstig ist die Vorrichtung zur Einstellung dieses Abstands nach Art eines Teleskops ausgebildet, oder nach Art einer Schere, oder aber nach Art eines Parallelogramms.

Auch wenn die Vorrichtung zur Einstellung dieses Abstands klappbar ausgebildet ist, lässt sich die Erfindung mit Vorteil realisieren.

Weiterhin ist es von Vorteil, wenn die Gülleverteilvorrichtung einen Rahmen aufweist, an welchem die Schleppschläuche befestigt sind, und der in Teilbreiten um wenigstens eine vertikale Achse klappbar ausgebildet ist.

Zur problemlosen Gülleverteilung ist es vorteilhaft, wenn die Gülleverteilvorrichtung einen Zentralverteiler aufweist, aber auch, wenn die Gülleverteilvorrichtung mehrere Verteiler aufweist, die an den klappbaren Teilbreiten der Gülleverteilvorrichtung angeordnet sind.

Wenn mehrere Verteiler vorgesehen sind, ist es vorteilhaft, wenn die Verteiler als lang gestreckte Rohrverteiler oder als lang gestreckte Schneckenverteiler mit radialen Schleppschlauchabgängen oder aber als kurze Rohrverteiler mit Schneidwerk und axialen Schleppschlauchabgängen ausgebildet sind.

Darüber hinaus sind Gülleausbringfahrzeuge mit Gülleverteilvorrichtungen von Vorteil, bei denen die horizontale Schwenkachse in der Längsachse der Verteiler oder parallel zur Längsachse, beispielsweise unterhalb oder oberhalb der Verteiler verläuft.

Ferner sind Gülleausbringfahrzeuge vorteilhaft, wenn die Enden der Schleppschläuche als freie Austrittsöffnungen ausgebildet sind, oder wenn an den Austrittsöffnungen der Schleppschläuche Dungspendedüsen angeordnet sind, wobei die Dungspendedüsen als Gleitschuhe ausgebildet sein können.

Ferner ist es vorteilhaft, wenn die Schleppschläuche mittels verstellbarer Klemmbügel am Rahmen angeordnet sind, wobei sie in besonders vorteilhafter Weise federnd am Rahmen angeordnet sein können.

Diese vorteilhafte Bauweise wird erreicht, wenn die Schleppschläuche mittels der verstellbaren Klemmbügel federnd am Rahmen angeordnet sind.

Mit Hilfe der Zeichnungen wird die Erfindung anhand von Ausführungsbeispielen noch näher erläutert.

Es zeigt:
Figur 1 ein Gülleausbringfahrzeug in Rückansicht in Gülleausbringstellung;
Figur 2 ein Gülleausbringfahrzeug in Teil-Rückansicht in Transportstellung;
Figur 3 eine Variante des Gülleausbringfahrzeug in Teil-Rückansicht in Transportstellung;
Figur 4 die Variante des Gülleausbringfahrzeug gemäß Figur 3 in Teil-Rückansicht in Ausbringstellung;
Figur 5 eine weitere Variante des Gülleausbringfahrzeug in Teil-Rückansicht in Transportstellung;
Figur 6 eine Längeneinstellvorrichtung für die Schleppschläuche als Teleskop-Verstelleinrichtung;
Figur 7 eine Längeneinstellvorrichtung für die Schleppschläuche als Scheren-Verstelleinrichtung,
Figur 8 eine Längeneinstellvorrichtung für die Schleppschläuche als Parallelogramm-Verstelleinrichtung und
Figur 9 eine Längeneinstellvorrichtung für die Schleppschläuche als Klapp-Verstelleinrichtung.

In den Figuren sind sich entsprechende Elemente mit übereinstimmenden Bezugszeichen versehen, gegebenenfalls weisen sie einen nachgestellten Index auf, welcher der Figurenbezifferung entspricht.

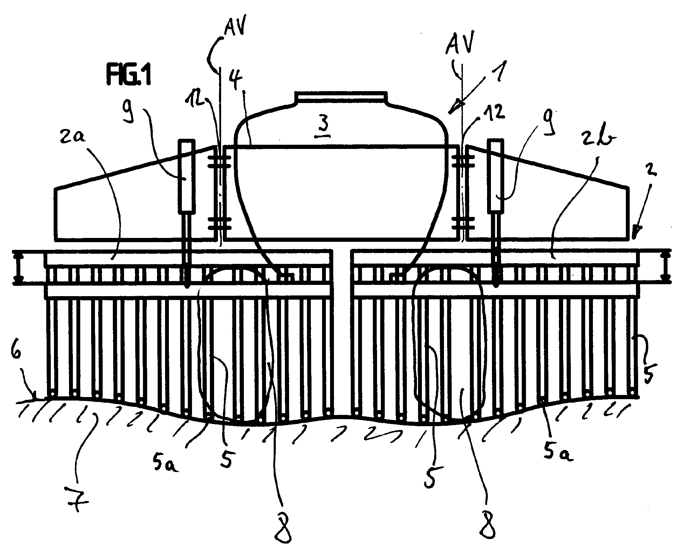

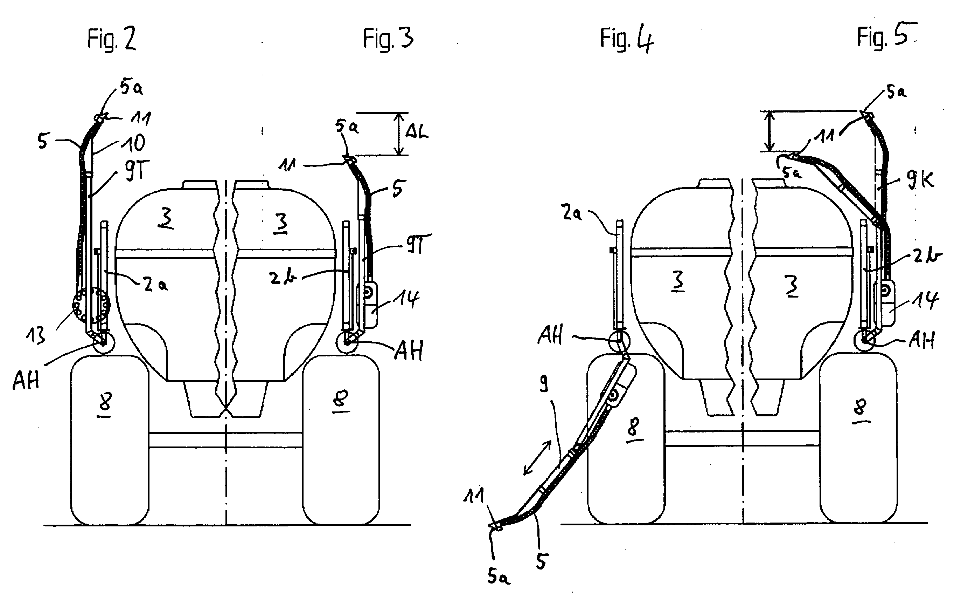

In Figur 1 ist in Rückansicht ein Gülleausbringfahrzeug 1 gezeigt, an dessen Rückseite eine Gülleverteilvorrichtung 2 angeordnet ist. Diese Gülleverteilvorrichtung 2 befindet sich in Arbeitsstellung. Das Gülleausbringfahrzeug 1 weist ferner als Güllevorratsbehälter ein Güllefass 3 auf, welches über nicht dargestellte Leitungen mit der Gülleverteilvorrichtung 2 verbunden ist. Die Gülleverteilvorrichtung 2 besteht u.a. aus einzelnen Verteilerabschnitten 2a und 2b, die in Teilbreiten 2a, 2b an einem Rahmen 4 derart angeordnet sind, dass sie aus ihrer Arbeitsstellung heraus um eine horizontale Schwenkachse AH und eine vertikale Schwenkachse AV in eine Transportstellung geschwenkt werden können. Die Transportstellung ist in den Figuren 2, 3 und 5 gezeigt und stellt die Situation dar, in welcher das Gülleausbringfahrzeug 1 am Straßenverkehr teilnimmt.

Die Gülleverteilvorrichtung 2 mit ihren Verteilerabschnitten 2a und 2b wird vom Güllefass 3 mit Gülle G versorgt. Das geschieht über die bereits genannten Leitungen, wobei jeder der Verteilerabschnitte 2a und 2b getrennt oder über einen Zentralverteiler versorgt werden kann. Ein Zentralverteiler ist hier nicht gezeigt, andere Verteiler werden in den folgenden Figuren dargestellt und gegebenenfalls erläutert, wobei ihre Bauform nicht relevant für die Realisierung der Erfindung ist.

An den Verteilerabschnitten 2a und 2b befinden sich Schleppschläuche 5 mit Austrittsöffnungen 5a für die Gülle G. Diese Austrittsföffnungen 5a sind, wie die Darstellung in Figur 4 zeigt, in der Arbeitsstellung, d.h. während der Ausbringung der Gülle G nach unten zur Oberfläche 6 des Ackerbodens 7 hin gerichtet.

In Figur 2 ist ein Gülleausbringfahrzeug 1 in einer Teil-Rückansicht dargestellt. Das Güllefass 3 ist auf einem nicht näher bezeichneten Fahrgestell mit Rädern 8 montiert. Die Räder sind verhältnismäßig groß, so dass sich die horizontale Schwenkachse AH relativ weit über der Oberfläche 6 des Ackerbodens 7 befindet. Gülleausbringfahrzeuge 1 mit großer Bereifung sind bei hohen Lasten in weichen Böden vorteilhaft. Durch diese Bauart ist eine große Bauhöhe der Gülleausbringfahrzeuge bedingt.

Wie Figur 4 zeigt, sind die in Ausbringstellung nach unten weisenden Austrittsöffnungen 5a der als Spiralschläuche ausgebildeten Schleppschläuche 5 daher an weit nach unten ragenden Auslegern 9 mittelbar an den Verteilerabschnitten 2a, 2b befestigt. Die Spiralschläuche 5 sind über die Ausleger 9 mit Hilfe von Spannfedern 10 an den Verteilerabschnitten 2a und 2b abgestützt, so dass sie bei der Ausbringung der Gülle G in Fahrtrichtung gegen die Oberfläche 6 des Ackerbodens 7 gedrückt werden, aber jederzeit nachgiebig gegenüber nicht dargestellten Hindernissen auf der Oberfläche 6 des Ackerbodens 7 auslenkbar sind. Zur besseren Anpassung an die Unebenheiten des Ackerbodens 7 sind an den Enden der Spiralschläuche 5 Gleitschuhe 11 angeordnet, welche mit Hilfe der Spannfedern 10 federbelastet auf der Oberfläche 6 des Ackerbodens 7 gleiten und die ihrerseits ackerseitige Austrittsöffnungen 5a der Spiralschläuche 5 derart aufnehmen, dass die Gülle G durch die Gleitschuhe 11 auf die Oberfläche 6 des Ackerbodens 7 gelangt.

Nach Beendigung der Ausbringung der Gülle G werden die Verteilerabschnitte 2a und 2b im Rahmen 4 um die vertikale Schwenkachse AV mittels Schwenkbolzen 12 derart geschwenkt, dass sie parallel zur Längsachse des Gülleausbringfahrzeugs 1 ausgerichtet sind, wobei ihre den Schwenkbolzen 12 abgewandten freien Enden zur Frontseite des Gülleausbringfahrzeugs 1, aber auch nach hinten weisen können.

Spätestens in dieser Stellung werden die Verteilerabschnitte 2a und 2b soweit um ihre horizontale Schwenkachse AH geschwenkt, dass die Austrittsöffnungen 5a ihre Transportstellung einnehmen, die ein Auslaufen der Gülle G unmöglich macht. Diese Stellung ist in den Figuren 2, 3 und 5 für verschiedene Bauformen der Erfindung dargestellt und wird nachstehend erläutert. Die Antriebsart für die Schwenkung der Verteilerrohre 2a, 2b ist dabei ins Belieben des Fachmannes gesetzt.

Zurück zur Figur 2, hier ist der eine Verteilerabschnitt 2a in Transportstellung dargestellt, in der die Austrittsöffnungen 5a der Schleppschläuche 5 nach oben weisen. Der Ausleger 9, an dem die Schleppschläuche 5 mit Hilfe der Spannfedern 10 angelenkt sind, ist noch in seiner vollen Länge ausgefahren, so, wie es für die Gülleausbringung erforderlich ist. Es ist erkennbar, dass - bedingt durch die große Bereifung - die Gesamtbauhöhe des Gülleausbringfahrzeugs 1 erheblich ist. Um das Befahren an Waldrändern oder in Hallen zu erleichtern kann nun erfindungsgemäß der Ausleger 9 seine Länge verändern, so dass der Abstand zwischen der horizontalen Schwenkachse AH und den Austrittsöffnungen 5a um die Länge ΔL der Schleppschläuche 5 verändert werden kann.

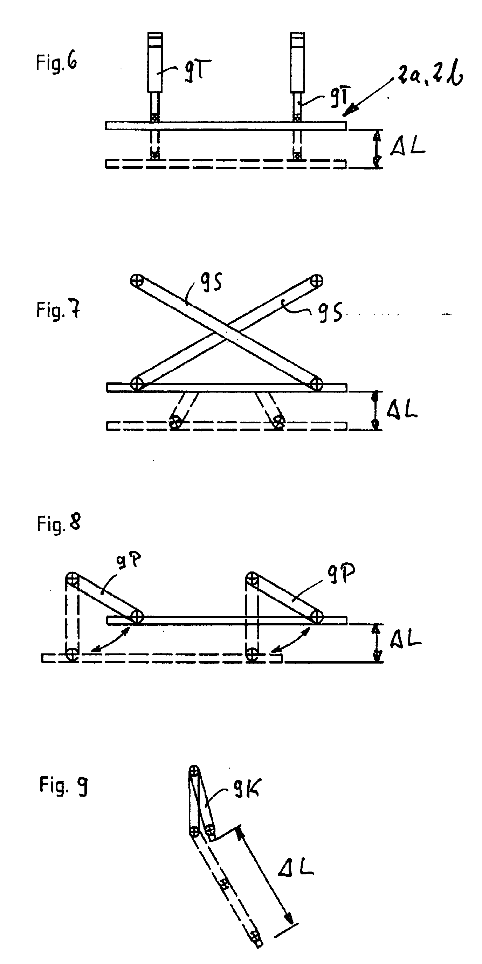

Der Ausleger 9 ist so aufgebaut, dass er wie ein Teleskop seine effektive Länge um den Betrag ΔL verändern kann. Eine Prinzipdarstellung findet sich in der Figur 6, in der ein Verteilerabschnitt 2a oder 2b schematisch gezeigt ist, der von zwei teleskopartigen Auslegern 9T in seiner Länge verändert werden kann. Hier sind zur deutlicheren Darstellung alle Schleppschläuche nicht dargestellt, sondern nur der längenveränderbare Ausleger 9T, an welchem die genannten Elemente am Gülleausbringfahrzeug befestigt sind.

In Figur 3 ist das Gülleausbringfahrzeug 1 in Transportstellung gezeigt, in der die Verringerung der Bauhöhe durch die Reduzierung der Länge um den Betrag ΔL bereits ersichtlich ist.

Bei den Figuren 2 und 3 sind in den Verteilerabschnitten 2a und 2b unterschiedliche Verteiler dargestellt, und zwar ist in Figur 2 ein kurzer Rohrverteiler mit Schneidwerk 13 und axialen Schleppschlauchabgängen gezeigt, in der Figur 3 ist hingegen ein lang gestreckter Schneckenverteiler mit radialen Schleppschlauchabgängen dargestellt.

Die Verringerung der Bauhöhe des Gülleausbringfahrzeugs 1 wird auch in Figur 5 deutlich. Dort ist der Ausleger als klappbar längenveränderlicher Ausleger 9K gezeigt, so dass in der Darstellung die Verkürzung des Abstands der Austrittsöffnungen 5a der Schleppschläuche 5 von der horizontalen Schwenkachse AH um den Betrag ΔL ersichtlich ist.

In den Figuren 7, 8 und 9 sind symbolisch die hier erwähnten längenveränderlichen Auslegerbauarten dargestellt, und zwar in Figur 7 der scherenartig längenveränderliche Ausleger 9S; in Figur 8 der parallelogrammartig längenveränderliche Ausleger 9P und in Figur 9 der klappbar längenveränderliche Ausleger 9K. Auch andere Bauformen sind darüber hinaus vorstellbar.

Es versteht sich, dass die Verteiler 13, 14 sowohl im starren Bereich des Rahmens 4 angeordnet sein können, aber auch im schwenkbaren Bereich, so dass es hier zur Realisierung der Erfindung keine Einschränkung gibt.

Ferner kann die Erfindung auch ohne Dungspendedüsen an den Austrittsöffnungen realisiert werden.

Mit Hilfe des erfindungsgemäßen Gülleausbringfahrzeugs 1 mit der Gülleverteilvorrichtung 2 ist eine Vorrichtung geschaffen worden, die auf einfache Weise die Probleme beim Straßenverkehr von Gülleausbringfahrzeugen 1 vermindert, indem sie erfolgreich verhindert, dass Restgülle aus den Austrittsöffnungen 5a tropft, während das Gülleausbringfahrzeug 1 öffentliche Straßen oder Wege befährt, und bei dem die Bauhöhe erheblich reduziert werden kann, um auch das Befahren von Waldrändern, Hallen oder Unterführungen zu erleichtern.

### Bezugszeichenliste

- 1: Gülleausbringfahrzeug
- 2: Gülleverteilvorrichtung
- 3: Güllefass
- 4: Rahmen
- 5: Schleppschlauch
- 5a: Austrittsöffnungen
- 6: Oberfläche
- 7: Ackerboden
- 8: Räder
- 9: Ausleger
- 9T: teleskopartig verstellbarer Ausleger
- 9S: scherenartig verstellbarer Ausleger
- 9P: parallelogrammartig verstellbarer Ausleger
- 9K: klappbarer Ausleger
- 10: Spannfedern
- 11: Gleitschuhe
- 12: Schwenkbolzen
- AH: horizontale Achse
- AV: vertikale Achse
- ΔL: Betrag der Längenänderung

## Patentansprüche

1. Gülleausbringfahrzeug mit einem Güllefass und einer Gülleverteilvorrichtung, bei dem die Gülleverteilvorrichtung Schleppschläuche zum bodennahen Ausbringen der Gülle aufweist, die aus einer Arbeitsstellung, in welcher die Austrittsöffnungen der Schleppschläuche in Bodennähe nach unten weisen, derart um eine horizontale Schwenkachse schwenkbar sind, dass ihre Austrittsöffnungen in einer Transportstellung vom Boden weg nach oben weisen, **dadurch gekennzeichnet, dass** die Gülleverteilvorrichtung (2, 2a, 2b) über eine Vorrichtung (9) verfügt, mittels welcher der Abstand zwischen der horizontalen Schwenkachse (AH) und den Austrittsöffnungen (5a) der Schleppschläuche (5) einstellbar ist.

2. Gülleausbringfahrzeug nach Anspruch 1, **dadurch gekennzeichnet, dass** die Gülleverteilvorrichtung (2, 2a, 2b) einen Rahmen (4) aufweist, an welchem die Schleppschläuche (5) befestigt sind, und dass der Rahmen (4) mit den Schleppschläuchen (5) um eine horizontale Schwenkachse (AH) schwenkbar ist, wobei der Abstand der Austrittsöffnungen (5a) der Schleppschläuche (5) von dieser Schwenkachse (AH) in der Arbeitsstellung größer ist, als in der Transportstellung.

3. Gülleausbringfahrzeug nach Anspruch 1, **dadurch gekennzeichnet, dass** die Vorrichtung zur Einstellung des Abstands nach Art eines teleskopartig längenveränderlichen Auslegers (9T) ausgebildet ist.

4. Gülleausbringfahrzeug nach Anspruch 1, **dadurch gekennzeichnet, dass** die Vorrichtung zur Einstellung des Abstands nach Art eines scherenartig längenveränderlichen Auslegers (9S) ausgebildet ist.

5. Gülleausbringfahrzeug nach Anspruch 1, **dadurch gekennzeichnet, dass** die Vorrichtung zur Einstellung des Abstands nach Art eines parallelogrammartig längenveränderlichen Auslegers (9P) ausgebildet ist.

6. Gülleausbringfahrzeug nach Anspruch 1, **dadurch gekennzeichnet, dass** die Vorrichtung zur Einstellung des Abstands durch einen klappbar längenveränderlichen Ausleger (9K) ausgebildet ist.

7. Gülleausbringfahrzeug nach Anspruch 1, **dadurch gekennzeichnet, dass** die Gülleverteilvorrichtung (2, 2a, 2b) einen Rahmen (4) aufweist, an welchem die Schleppschläuche (5) befestigt sind, und der in Teilbreiten (2a, 2b) um wenigstens eine vertikale Achse (AV) klappbar ausgebildet ist.

8. Gülleausbringfahrzeug nach Anspruch 1, **dadurch gekennzeichnet, dass** die Gülleverteilvorrichtung einen Zentralverteiler aufweist.

9. Gülleausbringfahrzeug nach Anspruch 1, **dadurch gekennzeichnet, dass** die Gülleverteilvorrichtung (2, 2a, 2b) mehrere Verteiler (13, 14) aufweist, die an den klappbaren Teilbreiten (2a, 2b) der Gülleverteilvorrichtung (2, 2a, 2b) angeordnet sind.

10. Gülleausbringfahrzeug nach Anspruch 1, **dadurch gekennzeichnet, dass** die Verteiler als Rohrverteiler (13) ausgebildet sind.

11. Gülleausbringfahrzeug nach Anspruch 1, **dadurch gekennzeichnet, dass** die Verteiler als lang gestreckte Schneckenverteiler (14) mit radialen Schleppschlauchabgängen ausgebildet sind.

12. Gülleausbringfahrzeug nach Anspruch 1, **dadurch gekennzeichnet, dass** die Verteiler als kurze Rohrverteiler (13) mit Schneidwerk und axialen Schleppschlauchabgängen ausgebildet sind.

13. Gülleausbringfahrzeug nach Anspruch 1, **dadurch gekennzeichnet, dass** die horizontale Schwenkachse in der Längsachse der Verteiler (13, 14) verläuft.

14. Gülleausbringfahrzeug nach Anspruch 1, **dadurch gekennzeichnet, dass** die horizontale Schwenkachse parallel zur Längsachse der Verteiler (13, 14) verläuft.

15. Gülleausbringfahrzeug nach Anspruch 1, **dadurch gekennzeichnet, dass** die horizontale Schwenkachse parallel oberhalb oder unterhalb zur Längsachse der Verteiler (13, 14) verläuft.

16. Gülleausbringfahrzeug nach Anspruch 1, **dadurch gekennzeichnet, dass** die Enden der Schleppschläuche (5) als freie Austrittsöffnungen (5a) ausgebildet sind.

17. Gülleausbringfahrzeug nach Anspruch 1, **dadurch gekennzeichnet, dass** an den Austrittsöffnungen (5a) der Schleppschläuche (5) Dungspendedüsen (11) angeordnet sind.

18. Gülleausbringfahrzeug nach Anspruch 1, **dadurch gekennzeichnet, dass** die Dungspendedüsen als Gleitschuhe (11) ausgebildet sind.

19. Gülleausbringfahrzeug nach Anspruch 1, **dadurch gekennzeichnet, dass** die Schleppschläuche (5) mittels verstellbarer Klemmbügel (10) am Rahmen (4) angeordnet sind.

20. Gülleausbringfahrzeug nach Anspruch 1, **dadurch gekennzeichnet, dass** die Schleppschläuche (5) federnd am Rahmen (4) angeordnet sind.

21. Gülleausbringfahrzeug nach Anspruch 1, **dadurch gekennzeichnet, dass** die Schleppschläuche (5) mittels verstellbarer Klemmbügel (10) und federnd am Rahmen (4) angeordnet sind.
